# EUROPEAN PATENT APPLICATION

(11) **EP 4 852 392 A1**
(43) Date of publication of application: **09.12.2026**
(21) Application number: 24921764.7
(22) Date of filing: 16.12.2024
(51) Int. Cl.: H04L 43/0876

(54) **SERVICE ACTION RECOGNITION METHOD**

(30) Priority: 30.01.2024 CN 202410133913
(71) Applicant: ZTE CORPORATION, Shenzhen, Guangdong 518057 (CN)
(72) Inventor: SONG, Ke, Shenzhen, Guangdong 518057 (CN); LI, Huaguang, Shenzhen, Guangdong 518057 (CN); WANG, Xiuzhong, Shenzhen, Guangdong 518057 (CN); LUO, Xujian, Shenzhen, Guangdong 518057 (CN); LIU, Xiliang, Shenzhen, Guangdong 518057 (CN)
(74) Representative: Deambrogi, Edgardo
(86) International application number: PCT/CN2024/139732
(87) International publication number: WO 2025/161742

(57) **Abstract**

Provided in the embodiments of the present application is a service action recognition method. The method comprises: acquiring a data stream in traffic of a service action to be recognized, and extracting from the data stream a stream feature of the service action to be recognized; on the basis of the stream feature of the service action to be recognized and a preset mapping relationship, generating a feature symbol sequence of the service action to be recognized, wherein the preset mapping relationship is a mapping relationship between a stream feature of a target service action and a feature symbol of the target service action; and when a feature symbol in the feature symbol sequence matches a feature symbol of the target service action, determining as the target service action the service action to be recognized.

## Description

### Cross-Reference to Related Application

The present disclosure claims priority to Chinese Patent Application No. 202410133913.4 filed on January 30, 2024, the entire disclosure of which is incorporated herein by reference.

### Technical Field

Embodiments of the present disclosure relate to the field of communications, and in particular, relate to a service action recognition method.

### Background

In recent years, with the continuous development of the mobile Internet, traffic composition of a mobile Application (App) has become increasingly complex. This makes it more and more difficult for a network device to accurately recognize or identify, by detecting network traffic of the App, user service actions of the App so as to analyze behavioral intentions of the user.

For example, the loading speed of a home screen of an App usually brings users different experiences and feelings. The network device is equipped with a Deep Packet Inspection (DPI) function to detect the home screen opening action of an App. Based on the detection results, the network device can analyze corresponding traffic metrics, evaluate network experience of the user, and trigger subsequent network optimization processing strategies. Nevertheless, the traffic generated during the home screen opening action of the App generally has a complex composition, and existing DPI methods cannot accurately recognize (or identify) such service actions.

### Summary

Embodiments of the present disclosure provide a service action recognition method, which may at least solve the problem in the related art that DPI methods cannot accurately recognize service actions in an App.

According to an embodiment of the present disclosure, a service action recognition method is provided. The method includes: acquiring data flows in traffic of a service action to be recognized, and extracting, from the data flows, flow features of the service action to be recognized; based on the flow features of the service action to be recognized and a mapping relationship established in advance, generating a feature symbol sequence of the service action to be recognized, wherein the mapping relationship established in advance maps flow features of a target service action to respective feature symbols of the target service action; and determining that the service action to be recognized is the target service action in response to a match of feature symbols in the feature symbol sequence with the feature symbols of the target service action.

According to another embodiment of the present disclosure, a computer-readable storage medium is further provided. The computer-readable storage medium stores a computer program thereon. The computer program, when executed by a processor, causes the processor to implement the operations of the method of any one of the method embodiments described above.

According to yet another embodiment of the present disclosure, an electronic apparatus is further provided. The apparatus includes a memory and a processor. The memory stores a computer program executable on the processor. The processor, when executing the computer program, implements the operations of any one of the method embodiments described above.

### Brief Description of the Drawings

Fig. 1 is a block diagram of a hardware structure of a mobile terminal for implementing a service action recognition method according to some embodiments of the present disclosure.
Fig. 2 is a schematic diagram of an architecture of a user intention detection system based on network traffic according to some embodiments of the present disclosure.
Fig. 3 is a flowchart of a service action recognition method according to some embodiments of the present disclosure.
Fig. 4 is a schematic diagram of a five-tuple flow table according to some embodiments of the present disclosure.
Fig. 5 is a schematic diagram of single-character feature symbols in a feature symbol mapping table according to some embodiments of the present disclosure.
Fig. 6 is a schematic diagram of double-character feature symbols in a feature symbol mapping table according to some embodiments of the present disclosure.
Fig. 7 is a schematic diagram of a traffic detection flow according to some embodiments of the present disclosure.
Fig. 8 is a schematic diagram of feature matching during a traffic detection phase according to some embodiments of the present disclosure.
Fig. 9 is a schematic diagram of a user table according to some embodiments of the present disclosure.
Fig. 10 is a schematic diagram of reporting a recognition result message according to some embodiments of the present disclosure.
Fig. 11 is a schematic diagram of a feature training flow according to some embodiments of the present disclosure.
Fig. 12 is a schematic diagram of compressing consecutively repeated feature symbols in a feature symbol sequence according to some embodiments of the present disclosure.
Fig. 13 is a schematic diagram of obtaining a longest common feature symbol subsequence according to some embodiments of the present disclosure.
Fig. 14 is a schematic diagram of a multi-sequence Longest Common Subsequence (LCS) algorithm according to some embodiments of the present disclosure.
Fig. 15 is a schematic diagram of obtaining start-type, end-type, and presence-type feature symbols according to some embodiments of the present disclosure.
Fig. 16 is a schematic diagram of obtaining attribution-type feature symbols according to some embodiments of the present disclosure.

### Detailed Description of the Embodiments

The embodiments of the present disclosure will be described in detail below with reference to the accompanying drawings.

It should be noted that the terms "first", "second", and the like in the specification, claims, and the above drawings are used to distinguish similar objects and are not necessarily intended to describe a specific order or chronological precedence.

The embodiments of the present disclosure are described below by taking a home screen opening action of an App as an example. When a user opens an App on a device, the App not only connects to various servers of its developer/provider but also invokes multiple public Application Programming Interface (API) cloud services (e.g., risk control services, Domain Name System (DNS) query services, mobile advertising services, logging services, etc.) to connect to corresponding API servers. The traffic composition is highly complex, often involving hundreds of Transmission Control Protocol (TCP) connections to Hypertext Transfer Protocol (HTTP) or Hypertext Transfer Protocol Secure (HTTPS) servers associated with dozens of different domain names. However, conventional Deep Packet Inspection (DPI) detection methods typically recognize (or identify) the App connection traffic and the various API cloud service connection traffics independently. This results in a failure to accurately recognize the home screen opening action of the App and an inability to attribute the traffic of these various API cloud services to the home screen opening action.

To address the aforementioned technical problems, the embodiments of the present disclosure propose a service action recognition method. The technical concept involves converting data flows in traffic of a service action to be recognized into corresponding feature symbols, matching the feature symbols of the service action to be recognized with feature symbols of a target service action recorded in a feature file, and determining that the service action to be recognized is the target service action upon a match. This approach not only accurately detects whether the service action to be recognized, which characterizes a user's intentional behavior, corresponds to the target service action, but also accurately attributes complex traffic, such as accesses to public App cloud services within the target service action, to the corresponding service action. Consequently, a network device can evaluate network experience of a user more accurately and provide a rational basis for network optimization functions.

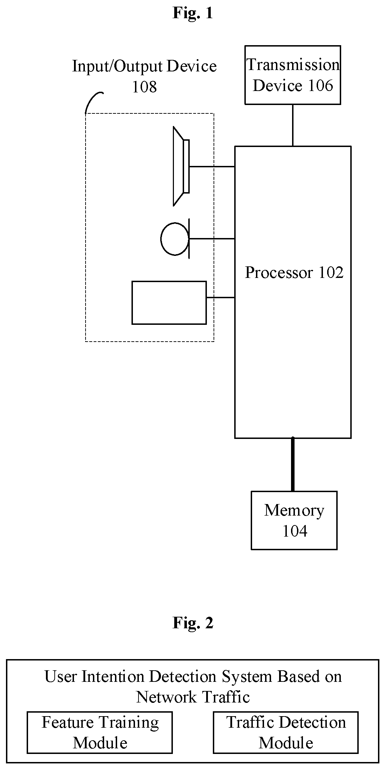

The method embodiments provided in the embodiments of the present disclosure may be executed in a mobile terminal, a computer terminal, or similar computing apparatuses. Taking execution on a mobile terminal as an example, Fig. 1 is a block diagram of a hardware structure of a mobile terminal for implementing a service action recognition method according to some embodiments of the present disclosure. As shown in Fig. 1, the mobile terminal may include one or more processors 102 (the processor 102 may include, but is not limited to, Microcontroller Units (MCUs) or Field Programmable Gate Arrays (FPGAs)) and a memory 104 for storing data. The mobile terminal may further include a transmission device 106 for communication functionality and input/output devices 108. Those having ordinary skill in the art will appreciate that the structure shown in Fig. 1 is merely illustrative and does not limit the structure of the mobile terminal. For example, the mobile terminal may include more or fewer components than those shown in Fig. 1, or have a configuration different from that shown in Fig. 1.

The memory 104 may be configured to store computer programs, such as software programs and modules of application software. Specifically, the memory 104 stores a computer program corresponding to the service action recognition method in the embodiments of the present disclosure. The processor 102 executes various functional applications and performs data processing by running the computer program stored in the memory 104, thereby implementing the method described above. The memory 104 may include high-speed random access memory and may further include non-volatile memory, such as one or more magnetic storage devices, flash memory, or other non-volatile solid-state memories. In some examples, the memory 104 may further include remotely located storage relative to the processor 102, which may be connected to the mobile terminal via a network. Examples of such networks include, but are not limited to, the Internet, intranets, local area networks, mobile communication networks, and combinations thereof.

The transmission device 106 is configured to receive or transmit data via a network. A specific example of the aforementioned network may include a wireless network provided by a communication service provider of the mobile terminal. In one example, the transmission device 106 includes a Network Interface Controller (NIC), which may be connected to other network devices via a base station to communicate with the Internet. In one example, the transmission device 106 may be a Radio Frequency (RF) module configured to communicate with the Internet wirelessly.

Fig. 2 is a schematic diagram of an architecture of a user intention detection system based on network traffic according to some embodiments of the present disclosure. The embodiments of the present disclosure may run on the system architecture shown in Fig. 2. As shown in Fig. 2, the system architecture includes a feature training module and a traffic detection module.

The feature training module may be configured to sample traffic of a target service action, extract flow features from data flows in the traffic of the target service action, assign a unique feature symbol to each flow feature, and establish a feature symbol mapping table. The feature training module may further be configured to sample the traffic of the target service action a plurality of times, generate a plurality of feature symbol sample sequences corresponding to the traffic of the target service action based on the feature symbol mapping table, and extract common feature symbols from the plurality of feature symbol sample sequences as recognition-type feature symbols and attribution-type feature symbols of the target service action, respectively.

The recognition-type feature symbols and the attribution-type feature symbols are used to complete service action recognition, improve recognition accuracy, and achieve attribution of relevant traffic such as accesses to public App cloud services to the corresponding service action.

The traffic detection module may be configured to extract flow features of data flows in traffic of a service action to be recognized, generate a feature symbol sequence of the service action to be recognized based on the feature symbol mapping table, and match feature symbols in the feature symbol sequence of the service action to be recognized with recognition-type feature symbols and attribution-type feature symbols of the target service action. On one hand, the matching process recognizes the occurrence of the target service action; on the other hand, the matching process attributes relevant traffic of the service action to be recognized to the target service action, thereby realizing accurate recognition of the service action and traffic.

It should be noted that the aforementioned user intention detection system based on network traffic may serve as a standalone Deep Packet Inspection (DPI) device, or as a built-in DPI functional component of a wireless network device, and may be applied to detection of service actions characterizing user intentional behaviors based on complex network traffic. The aforementioned user intention detection system based on network traffic may detect traffic of a service action of a user either in an inline mode or in an online mode, or alternatively in a parallel mode or in a bypass mode.

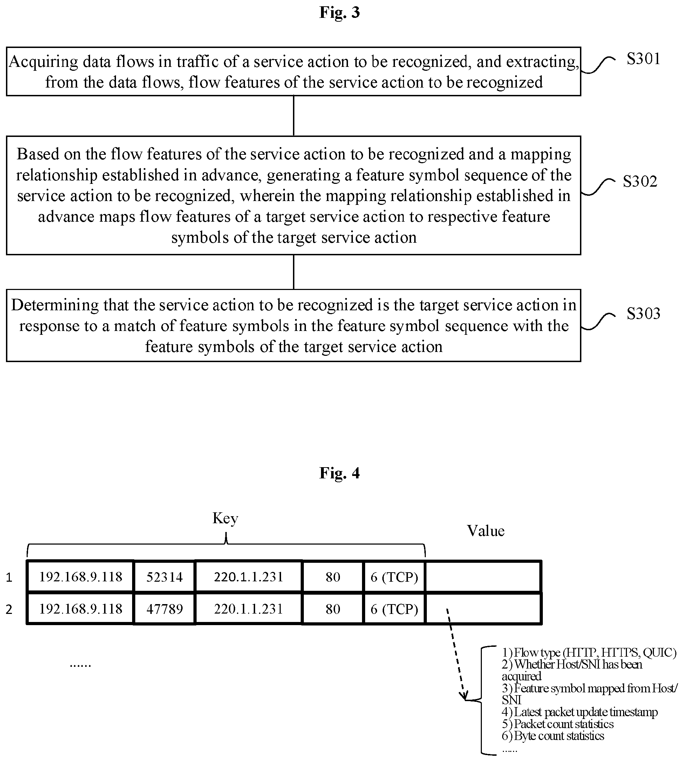

In the present embodiment, a service action recognition method running on the aforementioned mobile terminal or network architecture is provided. Fig. 3 is a flowchart of a service action recognition method according to some embodiments of the present disclosure. As shown in Fig. 3, the flow includes the following operations S301, S303 and S304.

In operation S301, data flows in traffic of a service action to be recognized are acquired, and flow features of the service action to be recognized are extracted from the data flows.

In the embodiments of the present disclosure, during a service action traffic detection phase, a service action of a user of an App may be accurately recognized by detecting network traffic of the App to analyze user behavioral intentions.

As an example, traffic of a service action to be recognized generated by a user using an App may be acquired, and corresponding flow features may be extracted from data flows in the traffic of the service action to be recognized.

In an exemplary embodiment, operation S301 may specifically include:
establishing a five-tuple flow table corresponding to the data flows in the traffic of the service action to be recognized, wherein each of the data flows includes at least one request message; and extracting, based on the five-tuple flow table, the flow features of the service action to be recognized, wherein each of the flow features is a server domain name carried in a first request message of a respective one of the data flows.

As an example, the traffic of a service action of each user may include multiple data flows. The data flows may include one or more of the following types, such as Hypertext Transfer Protocol (HTTP) flows, Hypertext Transfer Protocol Secure (HTTPS) flows, and Quick UDP Internet Connections (QUIC) flows, wherein UDP refers to User Datagram Protocol (UDP).

As an example, after acquiring the traffic of the service action to be recognized of the user, a five-tuple flow table may be established for the data flows in the traffic of the service action to be recognized.

As an example, each data flow may include one or more request messages, each carrying a server domain name. The flow feature may be the server domain name carried in the first request message of the data flow.

As an example, based on the five-tuple flow table and according to a time order in which the data flows in the traffic of the service action to be recognized occur, the server domain name carried in the first request message of each data flow may be extracted. The extracted server domain name serves as the flow feature.

For example, based on the established five-tuple flow table, a Host name in the first HTTP request message may be extracted from each HTTP flow, and a Server Name Indication (SNI) in the first ClientHello message may be extracted from each HTTPS/QUIC flow. The Host/SNI serves as the flow feature.

The following examples are provided to further illustrate the establishment process of the five-tuple flow table and the extraction process of flow features according to the embodiments of the present disclosure.

### Example 1

Establishment process of the five-tuple flow table:
Fig. 4 is a schematic diagram of a five-tuple flow table according to some embodiments of the present disclosure. As shown in Fig. 4, to implement data flow-based processing, a flow table in the form of a key-value memory data table may be established, and a flow context may be allocated to each data flow.

In the flow table, the "key" may be a five-tuple that uniquely identifies a data flow, namely, "User IP Address + User Port Number + Network IP Address + Network Port Number + TCP/UDP Protocol Number". Packets matching a certain five-tuple may be attributed to the flow context corresponding to the five-tuple.

The "value" in the flow table is a data structure storing processing state information of the data flow. The processing state information of the data flow may include: flow type (e.g., HTTP flow, HTTPS flow, QUIC flow, etc.), whether a Host/SNI has been extracted, the feature symbol mapped from the Host/SNI, update timestamps, accumulated packet counts, accumulated byte counts, and the like.

### Example 2

Extraction process of flow features for HTTP flows:
When extracting the Host feature from the first request of an HTTP flow, the data flows in the traffic of the service action may be identified first to determine whether the data flows are HTTP flows. If the data flows are HTTP flows, request messages in the data flows may be further identified. The specific process is as follows:
1) Identify data flows in the traffic of the service action.

For example, if the first uplink packet (which contains a TCP payload) of a TCP flow in traffic of a service action has payload content that matches a regular expression "^(GET|POST).+?\sHTTP/1\.[01]\r\n", the flow may be identified as an HTTP flow.

### 2) Identify request messages in the HTTP flow.

For example, if the TCP payload of an uplink packet of an HTTP flow matches a regular expression "^(GET|POST).+?\sHTTP/1\.[01]\r\n", the packet may be determined to be a request message.

### 3) Obtain the first request message of the HTTP flow.

For example, based on the "whether Host/SNI has been extracted" value in the flow context of the five-tuple flow table, it may be determined whether the Host in the first request has already been extracted from this HTTP flow. If the Host has already been extracted, no further extraction is performed from this HTTP flow; otherwise, extraction of the Host from this HTTP flow is performed again.

### 4) Extract the Host value from the first request message of the HTTP flow.

For example, the HTTP header (i.e., the message header) of the HTTP request message may be decoded to locate content matching the regular expression "Host:\s?(.+)\r\n" in the decoded message header, capture the content matching the "(.+)" portion of the regular expression, and use the captured content as the Host value.

### Example 3

### Extraction process of flow features for HTTPS flows:

When extracting the Server Name Indication (SNI) feature from the first ClientHello message of an HTTPS flow, the flows in the traffic of a service action may be identified first to determine whether the flows are HTTPS flows. If the flows are HTTPS flows, request messages in the HTTPS flows may be further identified. The specific process is as follows:

### 1) Identify flows in the traffic of the service action.

For example, if the first uplink packet (which contains a TCP payload) of a TCP flow in traffic of a service action has payload content meets basic decoding conditions for a ClientHello message as specified in Transport Layer Security (TLS) 1.0, TLS 1.1, TLS 1.2, or TLS 1.3 protocols, the flow may be identified as an HTTPS flow.

### 2) Identify the ClientHello message in the HTTPS flow.

For example, the first uplink packet (which contains a TCP payload) of an identified HTTPS flow may be taken as the ClientHello message.

### 3) Obtain the first ClientHello message of the HTTPS flow.

For example, based on the "whether Host/SNI has been extracted" value in the flow context of the five-tuple flow table, it may be determined whether the SNI in the first ClientHello request has already been extracted from this HTTPS flow. If the SNI has already been extracted, no further extraction is performed from this HTTPS flow; otherwise, extraction of the SNI from this HTTPS flow is performed again.

### 4) Acquire the SNI value from the first ClientHello message of the HTTPS flow.

For example, the first ClientHello message of an HTTPS flow may be decoded according to TLS 1.0, TLS 1.1, TLS 1.2, or TLS 1.3 protocols to acquire the content of the TLS Server Name Indication extension field as the SNI value.

### Example 4

### Extraction process of flow features for QUIC Flows:

When extracting the Server Name Indication (SNI) feature from the first ClientHello message of a QUIC flow, the flows in the traffic of a service action may be identified first to determine whether the flows are QUIC flows. If the flows are QUIC flows, request messages in the QUIC flows may be further identified. The specific process is as follows:

### 1) Identify flows in the traffic of the service action.

For example, if the first uplink packet (which contains a UDP payload) of a UDP flow in traffic of a service action meets basic decoding conditions for an Initial type message or a Zero Round Trip Time (0-RTT) type message specified in the QUIC protocol, the flow may be identified as a QUIC flow. For flows identified as QUIC flows, the flow type in the corresponding flow context of the five-tuple flow table may be updated to QUIC.

### 2) Identify the ClientHello message in the QUIC flow.

For example, the first uplink packet (which contains a UDP payload) of a QUIC flow, that is of the Initial type, and carries an encrypted Crypto frame may be taken as the ClientHello message.

### 3) Obtain the first ClientHello message of the QUIC flow.

For example, based on the "whether Host/SNI has been extracted" value in the flow context of the five-tuple flow table, it may be determined whether the SNI in the first ClientHello request has already been extracted from this QUIC flow. If the SNI has already been extracted, no further extraction is performed from this QUIC flow; otherwise, extraction of the SNI from this QUIC flow is performed again.

### 4) Acquire the SNI value from the first ClientHello message of the QUIC flow.

For example, the QUIC header may be decoded according to the QUIC protocol, then the Initial-type QUIC packet may be decrypted according to the QUIC protocol, then the Crypto frame may be reassembled according to the QUIC protocol and decoded according to the TLS 1.3 protocol, so as to acquire the content of the TLS Server Name Indication extension field and use the acquired content as the SNI value.

In operation S303, a feature symbol sequence of the service action to be recognized is generated based on the flow features of the service action to be recognized and a mapping relationship established in advance, wherein the mapping relationship established in advance maps flow features of a target service action to respective feature symbols of the target service action.

As an example, a pre-configured feature file of traffic of the service action may be acquired. The feature file may include a mapping relationship between flow features and feature symbols, and feature information of one or more target service actions. The feature information of each target service action may include a name or identifier of the target service action, feature symbols of the target service action, and the like.

As an example, a corresponding feature symbol may be pre-assigned to each flow feature. The feature symbols may include printable characters or non-printable characters. A feature symbol may consist of a single character or a combination of multiple characters. The embodiments of the present disclosure impose no limitation on the form or type of the feature symbols.

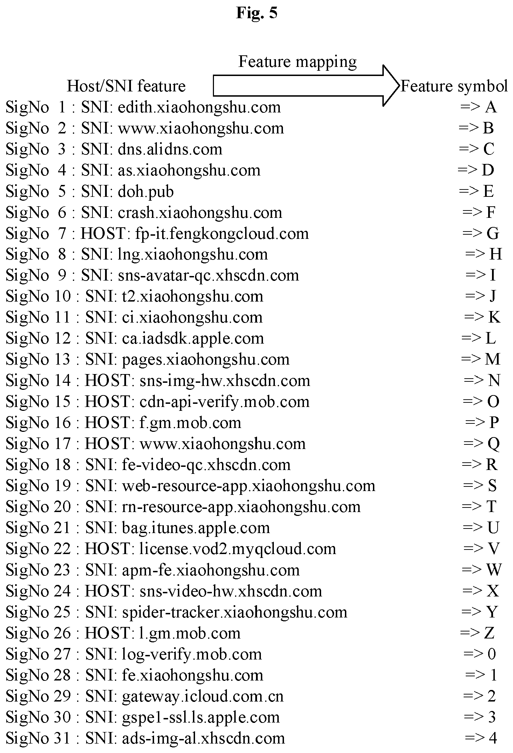

For example, Fig. 5 is a schematic diagram of single-character feature symbols in a feature symbol mapping table according to some embodiments of the present disclosure. As shown in Fig. 5, the mapping of over 30 different Host/SNI flow features, generated during the home screen opening of XXApp, to feature symbols is illustrated. Each Host/SNI flow feature corresponds to a unique single-character feature symbol.

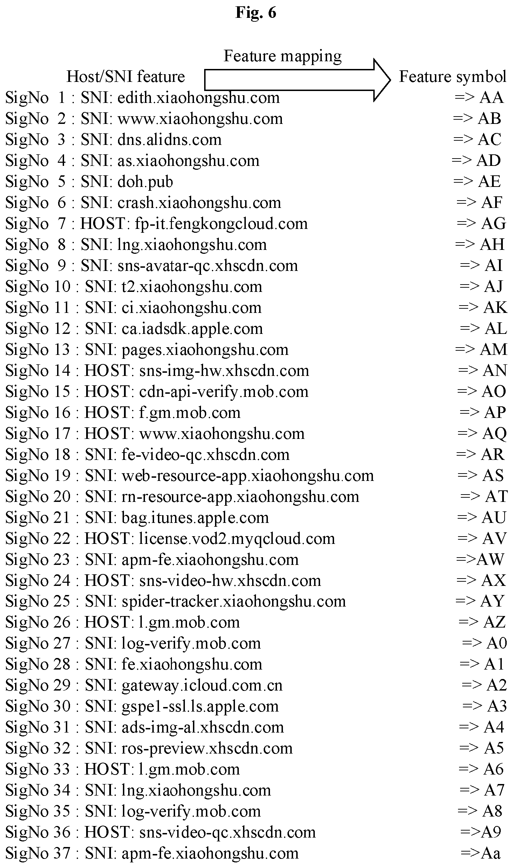

Fig. 6 is a schematic diagram of double-character feature symbols in a feature symbol mapping table according to some embodiments of the present disclosure. As shown in Fig. 6, double-character combinations of printable characters "A-Za-z0-9" may be selected to form a feature symbol set. The feature symbol set may include symbols such as "AA", "AB", "AC", ... "X0", "X1", ..., totaling 62 × 62 = 3844 distinct raw Host/SNI features expressible. Forming the feature symbol set with double-character combinations supports recognition of a greater number of service actions compared to a single-character feature symbol set. Fig. 6 illustrates the mapping of over 30 different lightweight Host/SNI features, generated during the home screen opening of XXApp, to double-character feature symbols.

Alternatively, triple-character combinations of printable characters "A-Za-z0-9" may be selected to form a feature symbol set. The feature symbol set may include symbols such as "AAA", "AAB", "AAC", ..., totaling 62 × 62 × 62 = 238,328 distinct Host/SNI features expressible.

In an exemplary embodiment, the feature symbols of the target service action include recognition-type feature symbols, the recognition-type feature symbols including at least one of: a start-type feature symbol set, a longest common feature symbol subsequence, a presence-type feature symbol set, or an end-type feature symbol set.

As an example, the start-type feature symbol set may indicate the start of the target service action; the longest common feature symbol subsequence may be used for accurate recognition of the target service action; the presence-type feature symbol set may enhance recognition accuracy of the target service action; and the end-type feature symbol set may indicate the completion of the target service action.

As an example, the feature symbol sequence of the service action to be recognized may be generated based on the flow features of the service action to be recognized and the mapping relationship between flow features and feature symbols.

In an exemplary embodiment, operation S303 may specifically include the following operations S3031 to S3033.

In operation S3031, a leading feature symbol sequence corresponding to the flow features is generated based on the mapping relationship established in advance and a time order in which the flow features of the service action to be recognized occur.

In operation S3032, the feature symbols of the target service action are traversed, and the leading feature symbol sequence is matched with the feature symbols of the target service action.

In operation S3033, the feature symbol sequence of the service action to be recognized is generated when the recognition-type feature symbols include the start-type feature symbol set and in response to a match of a feature symbol in the leading feature symbol sequence with at least one start-type feature symbol in the start-type feature symbol set.

As an example, based on the five-tuple flow table of the traffic of the service action to be recognized, the earliest occurring flow feature may be determined. The leading feature symbol sequence of the service action to be recognized may be generated based on the earliest occurring flow feature and the mapping relationship between flow features and feature symbols.

As an example, feature symbols of the target service action in the feature file may be traversed, and feature symbols in the leading feature symbol sequence of the service action to be recognized may be matched with the feature symbols of the target service action. When the recognition-type feature symbols include the start-type feature symbol set and a feature symbol in the leading feature symbol sequence matches at least one start-type feature symbol in the start-type feature symbol set, the generation of the feature symbol sequence subsequent to the leading feature symbol sequence may continue.

In an exemplary embodiment, operation S3033 may include:
marking a status of the service action to be recognized as a start status of the target service action; and generating, in the start status, the feature symbol sequence of the service action to be recognized.

In an exemplary embodiment, the method further includes:
obtaining a maximum duration of the target service action; and
stopping generating the feature symbol sequence of the service action to be recognized in response to a duration of generating the feature symbol sequence of the service action to be recognized reaching the maximum duration of the target service action.

As an example, when a feature symbol in the leading feature symbol sequence matches at least one start-type feature symbol in the start-type feature symbol set, the status of the service action to be recognized may be marked as the start status of the target service action.

As an example, the feature file may further include a maximum duration of the target service action. The maximum duration of the target service action may be obtained. When a duration elapsed since the start of generation of the feature symbol sequence of the service action to be recognized reaches the maximum duration of the target service action, the generation may be stopped.

As an example, in the case that the status of the service action to be recognized is the start status of the target service action, the generation of the feature symbol sequence subsequent to the leading feature symbol sequence may continue, and the generation may be stopped when the duration reaches the maximum duration.

In operation S304, in response to a match of feature symbols in the feature symbol sequence with the feature symbols of the target service action, it is determined that the service action to be recognized is the target service action.

As an example, feature symbols in the feature symbol sequence of the service action to be recognized may be matched with feature symbols of the target service action, and when the feature symbols in the feature symbol sequence of the service action to be recognized match the feature symbols of the target service action, the service action to be recognized may be determined to be the target service action.

As an example, the target service action may be a user service action on an App, such as a home screen opening action on the App.

In an exemplary embodiment, operation S304 may include the following operations S3041 and S3042.

In operation S3041, it is determined whether the feature symbols in the feature symbol sequence match the longest common feature symbol subsequence.

In operation S3042, in response to a match of the feature symbols in the feature symbol sequence with the longest common feature symbol subsequence, it is determined that the service action to be recognized is the target service action, and a recognition accuracy for the determination that the service action to be recognized is the target service action is set to a first accuracy.

As an example, if the longest common feature symbol subsequence of the target service action exists in the feature symbol sequence of the service action to be recognized, it may be determined that the service action recognition is successful, meaning the user's current service action to be recognized is the target service action, and the recognition accuracy at this point may be confirmed as general.

As an example, if the longest common feature symbol subsequence of the target service action is not matched within the maximum duration of the target service action, recognition of the service action to be recognized fails.

In an exemplary embodiment, after operation S3042, the method may further include:
determining whether the feature symbols in the feature symbol sequence include all presence-type feature symbols in the presence-type feature symbol set; and setting the recognition accuracy for the determination that the service action to be recognized is the target service action to a second accuracy in response to determining that the feature symbols in the feature symbol sequence include all the presence-type feature symbols in the presence-type feature symbol set, wherein the second accuracy is higher than the first accuracy.

As an example, after recognizing that the feature symbol sequence of the service action to be recognized contains the longest common feature symbol subsequence of the target service action, it may be further identified whether the feature symbol sequence contains all presence-type feature symbols of the target service action. If the feature symbol sequence contains all presence-type feature symbols of the target service action, the recognition accuracy may be determined as the second accuracy, which is higher than the first accuracy.

By matching the presence-type feature symbols, the recognition accuracy for the determination that the service action to be recognized is the target service action may be improved.

It should be noted that the first accuracy and the second accuracy in the embodiments of the present disclosure are evaluations of recognition results, which may be represented by specific numerical values (e.g., first accuracy is 60%, second accuracy is 90%), or by recognition levels (e.g., first accuracy is general, second accuracy is high; or first accuracy is medium, second accuracy is excellent), or by thresholds (e.g., first accuracy is less than or equal to a preset accuracy threshold, second accuracy is greater than the preset accuracy threshold). The embodiments impose no limitation on the evaluation method of recognition results.

In an exemplary embodiment, the feature symbols of the target service action further include attribution-type feature symbols. After operation S304, the method may further include the following operations S305 and S306.

In operation S305, the feature symbols in the feature symbol sequence are matched with the attribution-type feature symbols.

In operation S306, in response to a match of a feature symbol in the feature symbol sequence with the attribution-type feature symbols, it may be determined that a data flow corresponding to the matched feature symbol is a data flow in traffic of the target service action.

As an example, the attribution-type feature symbol set may be used to accurately attribute flows in traffic to the target service action.

As an example, in response to a match of a feature symbol in the feature symbol sequence of the service action to be recognized with the attribution-type feature symbols, it may be determined that the data flow corresponding to the matched feature symbol belongs to the traffic of the target service action, thereby realizing accurate traffic recognition.

The following examples further illustrate the traffic detection flow and the feature symbol matching process during the service action recognition in the traffic detection phase.

### Example 5

Traffic detection flow:

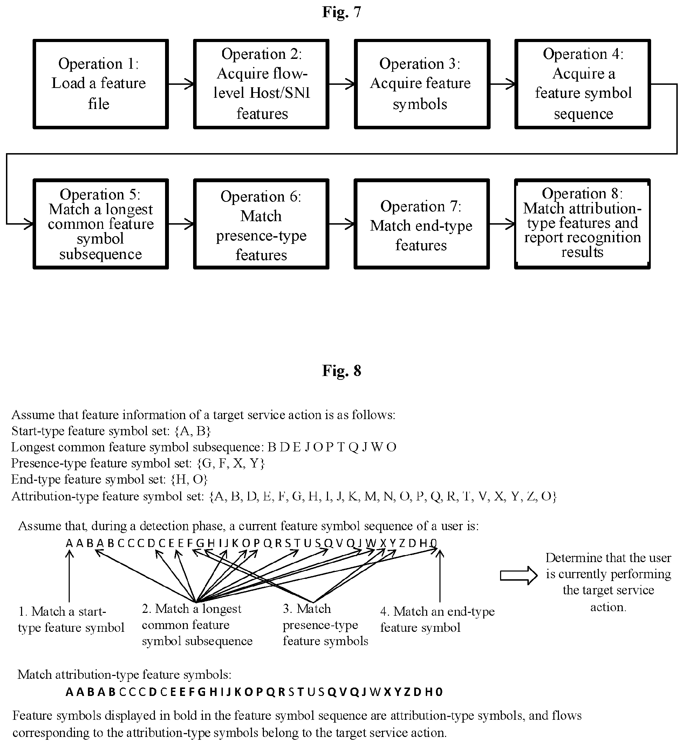

Fig. 7 is a schematic diagram of a traffic detection flow according to some embodiments of the present disclosure. As shown in Fig. 7, the traffic detection flow may specifically include the following operations 1 to 8.

In operation 1, a feature file is loaded.

The feature file acquired during a training phase may be loaded into system memory.

In operation 2, flow-level Host/SNI features are acquired.

The system performs detection on a per-user basis. A five-tuple flow table is established for traffic of each user. A Host of the first HTTP request message is extracted from each HTTP flow. An SNI of the first ClientHello message is extracted from each HTTPS/QUIC flow.

In operation 3, feature symbols are acquired.

The system maps Host/SNI to corresponding feature symbols based on a feature symbol mapping table.

In operation 4, a feature symbol sequence is acquired.

Feature information of each service action in the feature file is traversed. If a feature symbol of the service action to be recognized exists in a start-type feature symbol set of a service action in the feature file, the service action of the user is marked as a start status. Subsequent feature symbols of the user are sequentially recorded until the service action to be recognized is recognized as a target service action or a maximum duration of the target service action is reached, thereby obtaining the feature symbol sequence of the service action of the user.

In operation 5, a longest common feature symbol subsequence is matched. If the longest common feature symbol subsequence of the service action to be recognized is detected to exist in the corresponding feature symbol sequence of the user, the service action recognition is deemed successful, that is, it can be determined that the user is currently performing the target service action, and a recognition accuracy is considered to be a first accuracy. If the longest common feature symbol subsequence of the service action is not matched within the maximum duration of the service action, the recognition of the service action is deemed to have failed, and subsequent operations are not continued.

In operation 6, presence-type features are matched. If the recognition is successful and the corresponding feature symbol sequence of the user contains all symbols in a presence-type feature symbol set of the service action, the recognition accuracy is considered to be a high accuracy.

In operation 7, end-type features are matched. If the recognition is successful and feature symbols in the corresponding feature symbol sequence of the user exist in an end-type feature symbol set of the service action, the service action recognition is deemed complete. If the end-type feature symbol is not matched within the maximum duration of the service action, the recognition is deemed to have failed, and subsequent operations are not continued.

In operation 8, attribution-type features are matched and recognition results are reported. If the system detects that the recognition is complete, traffic of attribution-type feature symbols is attributed to the service action, and flow records of relevant traffic are marked with the name or identifier of the service action. Recognition result information is collected and reported to an external system via messaging.

In the example, data flows in traffic of the service action to be recognized are converted into corresponding feature symbols, and the feature symbols of the service action to be recognized are matched with feature symbols of the target service action in the feature file. Upon a match, the service action to be recognized is determined to be the target service action. Whether the service action to be recognized characterizing a user's intentional behavior is the target service action is accurately detected. Complex traffic such as accesses to public App cloud services within the target service action is accurately attributed to the corresponding service action. By virtue of the solution, a network device can evaluate network experience of a user more accurately, and can provide a rational basis for network optimization functions.

### Example 6

Feature symbol matching process:
Fig. 8 is a schematic diagram of feature matching during a traffic detection phase according to some embodiments of the present disclosure. Referring to Fig. 8, assuming feature information of a target service action is: start-type feature symbol set {A, B}; longest common feature symbol subsequence "B D E J O P T Q J W 0"; presence-type feature symbol set {G, F, X, Y}; end-type feature symbol set {H, 0}; and attribution-type feature symbol set {A, B, D, E, F, G, H, I, J, K, M, N, O, P, Q, R, T, V, X, Y, Z, 0}. The current feature symbol sequence of the user is:
"A A B ABC C C DC E E F G H I J K 0 P Q R S T US Q V Q J W X Y Z D H 0".

After undergoing a feature matching process including matching start-type feature symbols, matching the longest common feature symbol subsequence, matching presence-type feature symbols, and matching end-type feature symbols, it can be confirmed that the service action currently performed by the user is the target service action.

After recognizing that the service action currently performed by the user is the target service action, it can be further checked whether each symbol in the current feature symbol sequence exists in the attribution-type feature symbol set. As shown in Fig. 8, the bolded feature symbols in the current feature symbol sequence exist in the attribution-type feature symbol set. The data flows corresponding to these matched attribution-type feature symbols in the current feature symbol sequence may be attributed to the traffic of the target service action.

In the example, feature symbols of a service action to be recognized are matched with feature symbols of a target service action recorded in a feature file. It can be confirmed that the service action currently performed by the user is the target service action through the operations of matching the feature symbols of the service action to be recognized with a start-type feature symbol set, a longest common feature symbol subsequence, and an end-type feature symbol set. The accuracy of confirming that the service action currently performed by the user is the target service action can be improved by matching presence-type feature symbols. Data flows corresponding to matched attribution-type feature symbols in the current feature symbol sequence of the user may be attributed to traffic of the target service action by matching the attribution-type feature symbols of the target service action. Consequently, a network device can evaluate network experience of a user more accurately, and a rational basis can be provided for network optimization functions.

As an example, prior to recognizing traffic of a service action to be recognized, a user table in the form of a key-value memory data table may be pre-established to implement detection based on a user service action. A user context is allocated to each user to record detection state information of the service action.

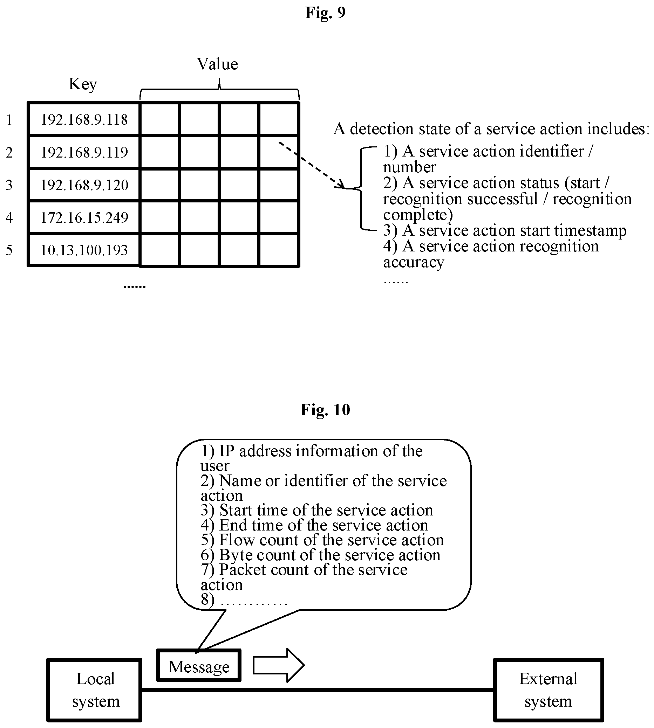

For example, Fig. 9 is a schematic diagram of a user table according to some embodiments of the present disclosure. As shown in Fig. 9, the "key" in the user table may be a "User IP Address" or a combination of "User IP Address and VLAN Identifier" that uniquely identifies a user. Packets matching a certain unique identifier may be attributed to the corresponding user context. The "value" in the user table is a data structure in the form of an array or singly linked list, storing detection state information of one or more potential service actions of a user. Each array or list element may include, but is not limited to, dynamic information such as service action identifier, service action status, service action start timestamp, service action recognition accuracy.

After successful recognition that a user has completed a service action, detection state information of the service action is generated in a user table of the user, specifically as the "value" in the user table corresponding to the user.

As an example, after successfully recognizing that a user has completed a service action, a service action recognition message may be generated based on the "key" and "value" in the user table and then sent to an external system. The external system may perform correlation analysis between user intentional behaviors and processing performance of the network device based on the service action recognition message, identify an impact of performance indicators of the network device on the user intentional behaviors, and adjust the performance indicators of the network device to improve user network experience.

For example, Fig. 10 is a schematic diagram of reporting a recognition result message according to some embodiments of the present disclosure. As shown in Fig. 10, after successfully recognizing that a user has completed a service action, relevant recognition and statistical information (e.g., who, when, what happened) of the service action of the user may be sent to the external system via a message. The message may include:
1) Information of the "User IP Address" or the "User IP Address and VLAN Identifier" of the user.
2) Start time and end time information of the service action of the user.
3) Name or identifier information of the service action of the user.
4) Traffic statistics of the service action of the user, such as number of flows, bytes, and packets.

The external system may perform correlation analysis between user intentional behaviors and processing performance of the network device based on the above information in the message, identify an impact of performance indicators of the network device on the user intentional behaviors, and adjust the performance indicators of the network device to improve user network experience.

In the embodiments of the present disclosure, prior to the service action traffic detection phase, a service feature training phase may be included. During the service feature training phase, common patterns of complex network traffic of the target service action may be pre-determined to generate feature information. The specific process is described in detail as follows.

In an exemplary embodiment, prior to operation S301, the method may further include:
sampling traffic of the target service action, and extracting the flow features of the target service action from data flows in the traffic of the target service action; and assigning a unique feature symbol to each of the flow features of the target service action, and establishing the mapping relationship that maps the flow features of the target service action to the respective feature symbols of the target service action.

In an exemplary embodiment, data flows in traffic of the target service action include at least one of the following types: Hypertext Transfer Protocol (HTTP) flows, Hypertext Transfer Protocol Secure (HTTPS) flows, or Quick UDP Internet Connections (QUIC) flows.

In the embodiments of the present disclosure, the server domain name carried in the first request message of each data flow may serve as the corresponding flow feature, and the mapping relationship between flow features and feature symbols may be established during the service feature training phase.

As an example, traffic of the target service action may be pre-sampled, a five-tuple flow table for the target service action may be established, flow features of respective data flows in the traffic of the target service action may be extracted based on the five-tuple flow table, and a unique feature symbol may be assigned to the flow feature of each data flow to establish the mapping relationship between flow features and feature symbols.

As an example, flow-level HTTP Host, flow-level HTTPS SNI, or flow-level QUIC SNI may be adopted as "lightweight flow features".

For example, based on the established five-tuple flow table, the Host name of the first HTTP request message may be extracted from each HTTP flow, and the SNI of the first ClientHello message may be extracted from each HTTPS/QUIC flow. The Host/SNI serves as the feature of the data flow.

In an exemplary embodiment, prior to acquiring data flows in traffic of a service action to be recognized, the method further includes the following operations A11 and A12.

In operation A11, traffic of the target service action is sampled a plurality of times, the flow features of the target service action are extracted from data flows in each sampling of the traffic of the target service action, and a plurality of sets of flow feature samples corresponding to the traffic of the target service action are generated.

In operation A12, a plurality of feature symbol sample sequences corresponding to the target service action are generated based on the mapping relationship established in advance and the plurality of sets of flow feature samples.

In an exemplary embodiment, after operation A12, the method further includes operation A13.

In operation A13, recognition-type feature symbols and attribution-type feature symbols are extracted from the plurality of feature symbol sample sequences.

For instance, N samplings are performed on traffic of a target service action, and flow features of the target service action are extracted from data flows in the traffic for each sampling. For each sampling, a corresponding feature symbol sample sequence is generated according to a sequential order of appearance of each Host/SNI feature and based on a mapping relationship between flow features and feature symbols. Accordingly, N sets of feature symbol sample sequences are generated through the N samplings. Common feature symbols may be extracted from the N sets of feature symbol sample sequences to serve as recognition-type feature symbols and attribution-type feature symbols of the target service action, respectively.

For instance, common feature symbols may be acquired from the N sets of feature symbol sample sequences to serve respectively as a longest common feature symbol subsequence of the target service action, a start-type feature symbol set of the target service action, an end-type feature symbol set of the target service action, a presence-type feature symbol set of the target service action, and an attribution-type feature symbol set of the target service action.

As an example, all common feature symbols having identical sequential orders across a plurality of feature symbol sample sequences may be extracted in sequence to serve as the longest common feature symbol subsequence. Feature symbols existing in all of the plurality of feature symbol sample sequences and located within a first preset character range at a starting position of each sample sequence are taken as the start-type feature symbol set. Feature symbols existing in all of the plurality of feature symbol sample sequences and located within a second preset character range at an ending position of each sample sequence are taken as the end-type feature symbol set. Feature symbols existing in all of the plurality of feature symbol sample sequences, which are neither start-type feature symbols nor end-type feature symbols, nor belong to the longest common feature symbol subsequence, are taken as the presence-type feature symbol set. Feature symbols existing in feature symbol sample sequences exceeding a preset percentage of a total number of the feature symbol sample sequences are taken as the attribution-type feature symbols.

In an exemplary embodiment, operation A12 may include:
generating a plurality of preliminary feature symbol sample sequences corresponding to the target service action based on the mapping relationship established in advance and the plurality of sets of flow feature samples; and compressing consecutively repeated feature symbols in each of the plurality of preliminary feature symbol sample sequences into a single feature symbol, so as to generate the plurality of feature symbol sample sequences corresponding to the target service action.

As an example, a lightweight Host/SNI raw feature sequence generated by the target service action may be mapped to a preliminary feature symbol sequence based on the mapping relationship. A neighboring compression method may be applied to the preliminary feature symbol sequence to compress consecutively repeated feature symbols into a single feature symbol, thereby generating the feature symbol sequence. For example, "CC" may be compressed into "C", and "EEEE" into "E".

The following examples further illustrate the feature training flow during the service feature training phase, the neighboring compression process of feature symbol sequences, and the acquisition processes of the longest common feature symbol subsequence, start-type feature symbol set, end-type feature symbol set, presence-type feature symbol set, and attribution-type feature symbol set.

### Example 7

Feature training flow in service feature training phase:

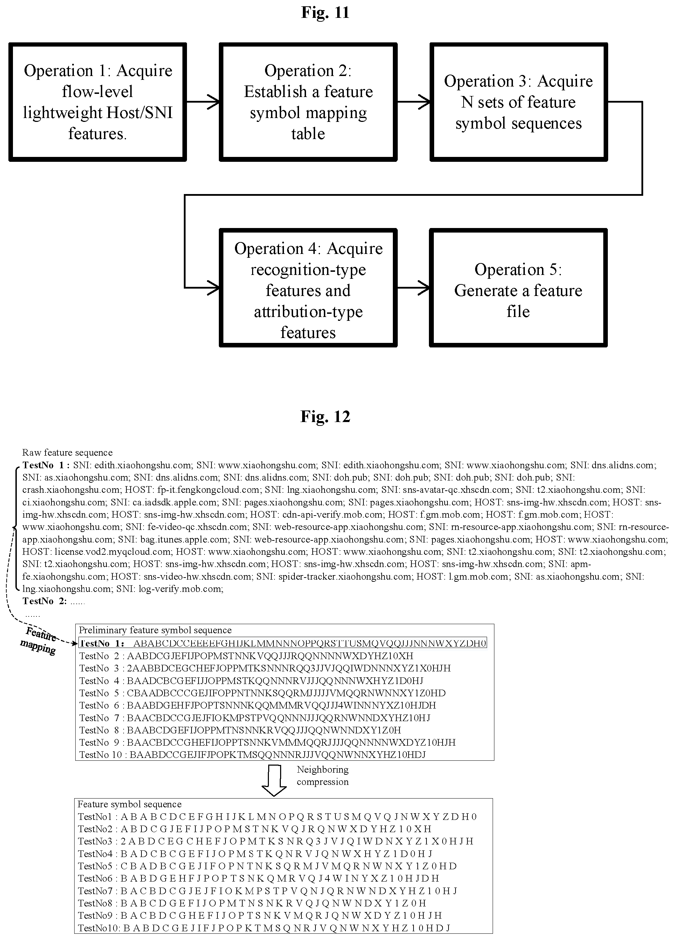

Fig. 11 is a schematic diagram of a feature training flow according to some embodiments of the present disclosure. As shown in Fig. 11, the feature training may specifically include the following operations 1 to 5.

In operation 1, flow-level lightweight Host/SNI features are acquired.

The system performs samplings on traffic of a target service action to establish a five-tuple flow table. A Host of a first HTTP request message is extracted from each HTTP flow, and an SNI of a first ClientHello message is extracted from each HTTPS/QUIC flow. The Host/SNI may be used as lightweight raw features of the flow.

In operation 2, a feature symbol mapping table is established.

A feature symbol mapping table for the lightweight raw features Host/SNI, is established. A unique feature symbol is assigned to each Host/SNI.

In operation 3, N sets of feature symbol sequences are acquired.

N samplings are performed on the traffic of the target service action. For each sampling, a corresponding feature symbol sequence is generated according to a sequential order of appearance of each Host/SNI raw feature. Accordingly, N feature symbol sequences are obtained through the N samplings.

A maximum duration of the N samplings is obtained to avoid potential mismatches caused by unlimited accumulation of features during a traffic detection phase.

In operation 4, recognition-type features and attribution-type features are acquired.

The following features are acquired from the N feature symbol sequences obtained through the N samplings:
1) A start-type feature symbol set is acquired to indicate a start of the target service action.
2) A longest common feature symbol subsequence is acquired for accurate recognition of the target service action.
3) A presence-type feature symbol set is acquired to enhance recognition accuracy of the target service action (optional).
4) An attribution-type feature symbol set is acquired to accurately attribute relevant traffic to the target service action.
5) An end-type feature symbol set is acquired to indicate completion of the target service action.

In operation 5, a feature file is generated.

Feature information of the target service action is organized into structured data and stored in a feature file. One feature file may include the feature symbol mapping table and feature information of one or more service actions. The feature information of each target service action may include:
1) A name or identifier of the target service action;
2) A maximum duration of the target service action;
3) The start-type feature symbol set;
4) The longest common feature symbol subsequence;
5) The presence-type feature symbol set;
6) The attribution-type feature symbol set;
7) The end-type feature symbol set.

### Example 8

Neighboring compression process of feature symbol sequences:
Fig. 12 is a schematic diagram of compressing consecutively repeated feature symbols in a feature symbol sequence according to some embodiments of the present disclosure. As shown in Fig. 12, taking a home screen opening action of an App as a target service action, Fig. 12 illustrates a process of obtaining ten corresponding feature symbol sequences through ten test samplings of the target service action. The following description takes "TestNo 1" of one sampling test of the target service action in Fig. 12 as an example.
1) In one sampling test "TestNo 1" of the target service action, a lightweight raw feature sequence obtained by the system is: "SNI: edith.xiaohongshu.com; SNI: www.xiaohongshu.com; SNI: edith.xiaohongshu.com; SNI: www.xiaohongshu.com; SNI: dns.alidns.com; SNI: as.xiaohongshu.com; SNI: dns.alidns.com; SNI: dns.alidns.com; SNI: doh.pub; SNI: doh.pub; SNI: doh.pub; SNI: doh.pub; SNI: crash.xiaohongshu.com; HOST: fp-it.fengkongcloud.com; SNI: lng.xiaohongshu.com; SNI: sns-avatar-qc.xhscdn.com; SNI: t2.xiaohongshu.com; SNI: ci.xiaohongshu.com; SNI: ca.iadsdk.apple.com; SNI: pages.xiaohongshu.com; SNI: pages.xiaohongshu.com; HOST: sns-img-hw.xhscdn.com; HOST: sns-img-hw.xhscdn.com; HOST: sns-img-hw.xhscdn.com; HOST: cdn-api-verify.mob.com; HOST: f.gm.mob.com; HOST: f.gm.mob.com; HOST: www.xiaohongshu.com; SNI: fe-video-qc.xhscdn.com; SNI: web-resource-app.xiaohongshu.com; SNI: rn-resource-app.xiaohongshu.com; SNI: rn-resource-app.xiaohongshu.com; SNI: bag.itunes.apple.com; SNI: web-resource-app.xiaohongshu.com; SNI: pages.xiaohongshu.com; HOST: www.xiaohongshu.com; HOST: license.vod2.myqcloud.com; HOST: www.xiaohongshu.com; HOST: www.xiaohongshu.com; SNI: t2.xiaohongshu.com; SNI: t2.xiaohongshu.com; SNI: t2.xiaohongshu.com; HOST: sns-img-hw.xhscdn.com; HOST: sns-img-hw.xhscdn.com; HOST: sns-img-hw.xhscdn.com; SNI: apm-fe.xiaohongshu.com; HOST: sns-video-hw.xhscdn.com; SNI: spider-tracker.xiaohongshu.com; HOST: l.gm.mob.com; SNI: as.xiaohongshu.com; SNI: lng.xiaohongshu.com; SNI: log-verify.mob.com;".
2) According to the mapping relationship between flow features and feature symbols in a single-character feature symbol mapping table (e.g., Fig. 5), a preliminary feature symbol sequence obtained from "TestNo 1" is: "ABABCDCCEEEEFGHIJKLMMNNNOPPQRSTTUSMQVQQJJJNNNWXYZDH0".
3) The preliminary feature symbol sequence "ABABCDCCEEEEFGHIJKLMMNNNOPPQRSTTUSMQVQQJJJNNNWXYZDH0" undergoes neighboring feature symbol compression to obtain a compressed feature symbol sequence: "ABABCDCEFGHIJKLMNOPQRSTUSMQVQJNWXYZDH0".

### Example 9

Acquisition process of longest common feature symbol subsequence:
A multi-sequence Longest Common Subsequence (LCS) algorithm may be employed to acquire a common feature symbol subsequence from a plurality of feature symbol sample sequences of a target service action. A longest common feature symbol sequence across the plurality of feature symbol sample sequences may be taken as the longest common feature symbol subsequence.

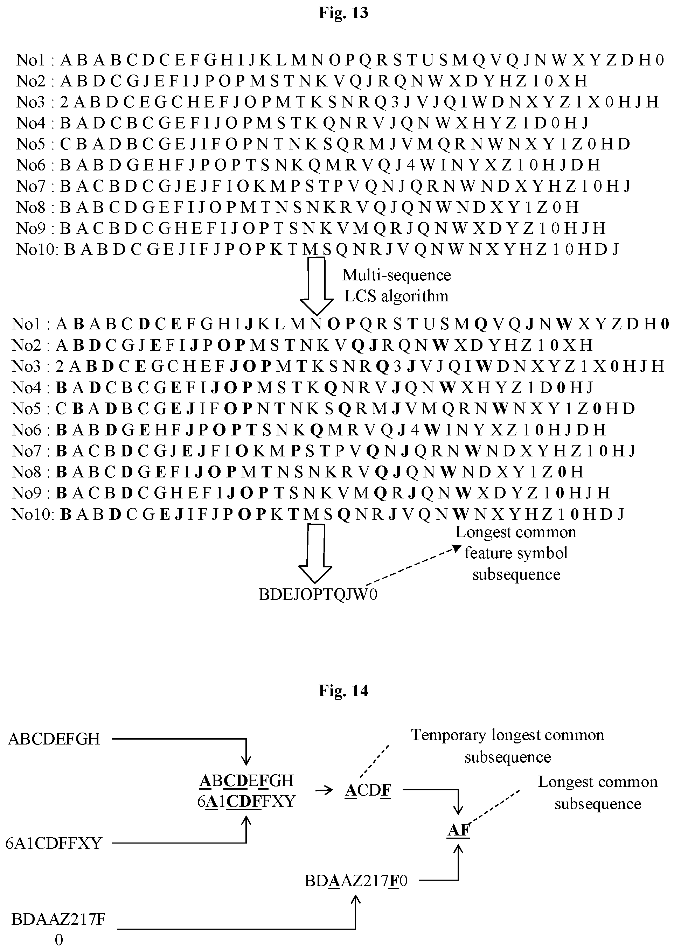

Fig. 13 is a schematic diagram of obtaining a longest common feature symbol subsequence according to some embodiments of the present disclosure. Taking the thirteen feature symbol sequences generated in Fig. 12 as an example, as shown in Fig. 13, the multi-sequence LCS algorithm is employed to acquire a common feature symbol subsequence from ten feature symbol sequences obtained through multiple training sessions of the target service action. The longest common feature symbol sequence across the ten feature symbol sample sequences is taken as the longest common feature symbol subsequence.

In the longest common feature symbol subsequence, symbols may or may not be consecutive, but their order of appearance in each feature symbol sequence remains identical.

In Fig. 13, common feature symbols shared among the sequences No1 to No10 are highlighted in bold. As shown in Fig. 13, the longest common feature symbol subsequence "BDEJOPTQJW0" consisting of eleven single characters is acquired based on the multi-sequence LCS algorithm. As can be seen from the figure, although the symbols in the longest common feature symbol subsequence "BDEJOPTQJW0" may not be consecutive within each of the plurality of feature symbol sample sequences of the target service action, the sequential order in which these symbols appear in each of the plurality of feature symbol sample sequences remains identical to their sequential order in the longest common feature symbol subsequence.

Although symbol "A" exists in all ten feature symbol sequences in Fig. 13, its position relative to "B" varies (sometimes preceding "B", sometimes following "B"). Since the order of "A" and "B" is inconsistent, only one of "A" and "B" can be selected. Selecting "B" in Fig. 13 is merely an example; "A" may alternatively be selected while discarding "B". Those having ordinary skill in the art may make selections based on actual conditions, and the embodiments of the present disclosure impose no limitation here.

### Example 10

Process of acquiring longest common subsequence based on multi-sequence LCS algorithm:
The present disclosure may employ a multi-sequence LCS algorithm to acquire a longest common subsequence from a plurality of sequences.

A specific method may involve: randomly selecting two sequences to obtain their longest common subsequence as a temporary longest common subsequence; then obtaining a new temporary longest common subsequence by matching the temporary longest common subsequence with a randomly selected third sequence; and so on, until all sequences are processed. The final temporary longest common subsequence is taken as the longest common subsequence of the plurality of sequences.

A longest common subsequence of two sequences is the longest among all non-empty common subsequences of the two sequences. Symbols in a subsequence may or may not be consecutive within the original sequence, but the sequential order of the symbols in the subsequence remains identical to their order of appearance in the original sequence. For example, non-empty common subsequences between "ABCD" and "NAXDE" include "A", "D", and "AD", where "AD" is the longest common subsequence.

For example, Fig. 14 is a schematic diagram of a multi-sequence LCS algorithm according to some embodiments of the present disclosure. As shown in Fig. 14, three feature symbol sequences "ABCDEFGH", "6A1CDFFXY", and "BDAAZ217F" are involved.

First, a temporary longest common subsequence "ACDF" is obtained from the first two sequences "ABCDEFGH" and "6A1CDFFXY". Then, a new temporary longest common subsequence "AF" is obtained by matching "ACDF" with the third sequence "BDAAZ217F". The final temporary subsequence "AF" serves as the longest common subsequence of the three sequences.

The LCS algorithm is a conventional algorithm for finding the longest common subsequence between two sequences. It may alternatively be implemented via full traversal or based on dynamic programming methods. Detailed descriptions of the specific algorithm are omitted herein.

### Example 11

Acquisition process of start-type, end-type, and presence-type feature symbol sets:
In embodiments of the present disclosure, feature symbols existing in all of a plurality of feature symbol sample sequences and located within a first preset character range at a starting position of each sample sequence are taken as a start-type feature symbol set. Feature symbols existing in all of the plurality of feature symbol sample sequences and located within a second preset character range at an ending position of each sample sequence are taken as an end-type feature symbol set. Feature symbols existing in all of the plurality of feature symbol sample sequences, which are neither start-type feature symbols nor end-type feature symbols, nor belong to the longest common feature symbol subsequence, are taken as a presence-type feature symbol set.

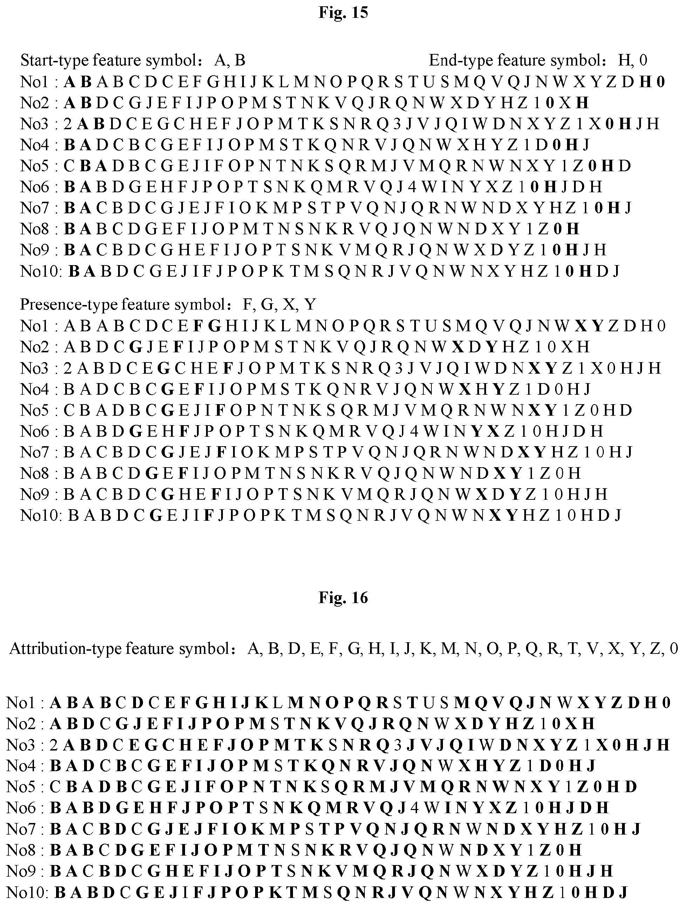

Fig. 15 is a schematic diagram of obtaining start-type, end-type, and presence-type feature symbols according to some embodiments of the present disclosure. As shown in Fig. 15:
1) Feature symbols existing in all sequences and located near the starting position of each sequence may be taken as start-type feature symbols. As shown in Fig. 15, the start-type feature symbols for this service action are "A" or "B". Here, "near the starting position" refers to the first X characters of each sequence, e.g., X=5.
2) Feature symbols existing in all sequences and located near the ending position of each sequence may be taken as end-type feature symbols. As shown in the figure, the end-type feature symbols for this service action are "H" or "0". Here, "near the ending position" refers to the last Y characters of each sequence, e.g., Y=5.
3) Z feature symbols may be selected from the feature symbols existing in all sequences to serve as presence-type feature symbols, provided these symbols are: neither start-type feature symbols, nor end-type feature symbols, nor symbols belonging to the longest common feature symbol subsequence. For example, "F", "G", "X", and "Y" in Fig. 15.
4) Recognition accuracy may be divided into multiple levels. Presence-type feature symbols may be used to increase recognition accuracy. For instance, recognition accuracy may be divided into two levels: general accuracy and high accuracy.
5) Presence-type feature symbols differ from symbols in the longest common feature symbol subsequence in terms of sequential order across the respective sequences. Specifically, the order of the presence-type feature symbols varies across the plurality of sequences, whereas the sequential order of the symbols in the longest common feature symbol subsequence remains identical to their order of appearance in each of the corresponding sequences.

### Example 12

Acquisition process of attribution-type feature symbol set:
In embodiments of the present disclosure, feature symbols existing in feature symbol sample sequences exceeding a preset percentage of a total number of the feature symbol sample sequences are taken as attribution-type feature symbols. For example, feature symbols existing in sequences exceeding 70% of the total number of sequences may be taken as attribution-type feature symbols. That is, if a certain feature symbol exists in more than 7 out of 10 sequences, it is considered an attribution-type feature symbol.

Fig. 16 is a schematic diagram of obtaining attribution-type feature symbols according to some embodiments of the present disclosure. In Fig. 13, feature symbols existing in all sequences are highlighted in bold to denote attribution-type feature symbols. Non-bolded symbols indicate those absent from all feature symbol sequences depicted in Fig. 16. For example, symbol "C" is absent from feature symbol sequence No6, and symbol "L" is absent from sequences No2, No3, No4, No5, No6, No7, No8, No9, and No10.

By refraining from classifying all feature symbols present in all sequences as attribution-type feature symbols, the embodiments of the present disclosure prevent occasional interference traffic from being misidentified as belonging to the target service action.

In the embodiments of the present disclosure, data flows in traffic of a service action to be recognized are acquired, and flow features of the service action to be recognized are extracted from the data flows. A mapping relationship established in advance, which maps flow features to feature symbols of a target service action, is acquired. A feature symbol sequence of the service action to be recognized is generated based on the flow features of the service action to be recognized and the mapping relationship. Upon a match of feature symbols in the feature symbol sequence with feature symbols of the target service action, the service action to be recognized is determined to be the target service action. This solves the problem in related technologies where DPI methods fail to accurately recognize service actions within Apps. The solution enables accurate recognition of service actions within Apps to characterize user intentional behaviors, thereby allowing network devices to evaluate user network experience more accurately and providing a rational basis for network optimization functions.

It will be apparent to those having ordinary skill in the art from the foregoing descriptions of the exemplary embodiments that the methods according to the aforementioned embodiments may be implemented by software in conjunction with a necessary general-purpose hardware platform; they may also be implemented by hardware, though the former is often a preferable implementation in many cases. Based on this understanding, the technical solutions of the present disclosure, or the portions contributing to the related art, may be embodied in the form of a software product. The computer software product is stored in a storage medium (e.g., Read-Only Memory (ROM)/Random Access Memory (RAM), magnetic disk, optical disk) and includes instructions enabling a terminal device (e.g., a mobile phone, computer, server, or network device) to execute the methods described in the various embodiments of the present disclosure.

The embodiments of the present disclosure further provide a computer-readable storage medium storing a computer program thereon, wherein the computer program is configured to, when executed, implement the operations of any one of the aforementioned method embodiments.

In an exemplary embodiment, the computer-readable storage medium may include, but is not limited to: a Universal Serial Bus (USB) flash drive, Read-Only Memory (ROM), Random Access Memory (RAM), a removable hard disk, a magnetic disk, an optical disk, or any other medium capable of storing a computer program.

The embodiments of the present disclosure further provide an electronic apparatus including a memory and a processor. A computer program is stored in the memory, and the processor is configured to run the computer program to execute the operations of any one of the aforementioned method embodiments.

In an exemplary embodiment, the electronic apparatus may further include a transmission device and input/output devices, wherein the transmission device is connected to the processor, and the input/output devices are connected to the processor.

For specific examples in the present embodiment, reference may be made to the examples described in the aforementioned embodiments and exemplary implementations; details are not repeated herein.

Obviously, those having ordinary skill in the art should understand that the modules or operations of the present disclosure may be implemented by general-purpose computing devices. They may be centralized on a single computing device or distributed across a network composed of multiple computing devices. They may be implemented by executable program code for the computing devices, thereby allowing them to be stored in a storage device and executed by the computing devices. In certain cases, the operations shown or described may be executed in an order different from that described herein, or they may be fabricated into individual integrated circuit modules, or multiple modules or operations may be fabricated into a single integrated circuit module for implementation. Consequently, the present disclosure is not limited to any specific combination of hardware and software.

The foregoing descriptions are merely exemplary embodiments of the present disclosure and are not intended to limit the present disclosure. Various modifications and variations will be apparent to those having ordinary skill in the art. Any modification, equivalent substitution, or improvement made within the principles of the present disclosure shall be encompassed within the scope of protection of the present disclosure.

## Claims

1. A service action recognition method, comprising:
acquiring data flows in traffic of a service action to be recognized, and extracting, from the data flows, flow features of the service action to be recognized;
based on the flow features of the service action to be recognized and a mapping relationship established in advance, generating a feature symbol sequence of the service action to be recognized, wherein the mapping relationship established in advance maps flow features of a target service action to respective feature symbols of the target service action; and
determining that the service action to be recognized is the target service action in response to a match of feature symbols in the feature symbol sequence with the feature symbols of the target service action.

2. The method according to claim 1, wherein acquiring data flows in traffic of a service action to be recognized, and extracting, from the data flows, flow features of the service action to be recognized comprises:
establishing a five-tuple flow table corresponding to the data flows in the traffic of the service action to be recognized, wherein each of the data flows comprises at least one request message; and
extracting, based on the five-tuple flow table, the flow features of the service action to be recognized, wherein each of the flow features is a server domain name carried in a first request message of a respective one of the data flows.

3. The method according to claim 1, wherein the feature symbols of the target service action comprise recognition-type feature symbols, the recognition-type feature symbols comprising at least one of: a start-type feature symbol set, a longest common feature symbol subsequence, a presence-type feature symbol set, or an end-type feature symbol set.

4. The method according to claim 3, wherein based on the flow features of the service action to be recognized and a mapping relationship established in advance, generating a feature symbol sequence of the service action to be recognized comprises:
generating a leading feature symbol sequence corresponding to the flow features based on the mapping relationship established in advance and a time order in which the flow features of the service action to be recognized occur;
traversing the feature symbols of the target service action, and matching the leading feature symbol sequence with the feature symbols of the target service action; and
generating the feature symbol sequence of the service action to be recognized when the recognition-type feature symbols comprise the start-type feature symbol set and in response to a match of a feature symbol in the leading feature symbol sequence with at least one start-type feature symbol in the start-type feature symbol set.

5. The method according to claim 4, wherein generating the feature symbol sequence of the service action to be recognized when the recognition-type feature symbols comprise the start-type feature symbol set and in response to a match of a feature symbol in the leading feature symbol sequence with at least one start-type feature symbol in the start-type feature symbol set comprises:
marking a status of the service action to be recognized as a start status of the target service action; and
generating, in the start status, the feature symbol sequence of the service action to be recognized.

6. The method according to claim 5, further comprising:
obtaining a maximum duration of the target service action; and
stopping generating the feature symbol sequence of the service action to be recognized in response to a duration of generating the feature symbol sequence of the service action to be recognized reaching the maximum duration of the target service action.

7. The method according to claim 3, wherein determining that the service action to be recognized is the target service action in response to a match of feature symbols in the feature symbol sequence with the feature symbols of the target service action comprises:
determining whether the feature symbols in the feature symbol sequence match the longest common feature symbol subsequence; and
determining that the service action to be recognized is the target service action and setting a recognition accuracy for the determination that the service action to be recognized is the target service action to a first accuracy in response to a match of the feature symbols in the feature symbol sequence with the longest common feature symbol subsequence.

8. The method according to claim 7, wherein after determining that the service action to be recognized is the target service action, the method further comprises:
determining whether the feature symbols in the feature symbol sequence comprise all presence-type feature symbols in the presence-type feature symbol set; and
setting the recognition accuracy for the determination that the service action to be recognized is the target service action to a second accuracy in response to determining that the feature symbols in the feature symbol sequence comprise all the presence-type feature symbols in the presence-type feature symbol set, wherein the second accuracy is higher than the first accuracy.

9. The method according to claim 7, wherein the feature symbols of the target service action further comprise attribution-type feature symbols, and after determining that the service action to be recognized is the target service action, the method further comprises:
matching the feature symbols in the feature symbol sequence with the attribution-type feature symbols; and
in response to a match of a feature symbol in the feature symbol sequence with the attribution-type feature symbols, determining that a data flow corresponding to the matched feature symbol is a data flow in traffic of the target service action.

10. The method according to claim 1, wherein before acquiring data flows in traffic of a service action to be recognized, the method further comprises:
sampling traffic of the target service action, and extracting the flow features of the target service action from data flows in the traffic of the target service action; and
assigning a unique feature symbol to each of the flow features of the target service action, and establishing the mapping relationship that maps the flow features of the target service action to the respective feature symbols of the target service action.

11. The method according to claim 9, wherein before acquiring data flows in traffic of a service action to be recognized, the method further comprises:
sampling traffic of the target service action a plurality of times, extracting the flow features of the target service action from data flows in each sampling of the traffic of the target service action, and generating a plurality of sets of flow feature samples corresponding to the traffic of the target service action; and
generating a plurality of feature symbol sample sequences corresponding to the target service action based on the mapping relationship established in advance and the plurality of sets of flow feature samples.

12. The method according to claim 11, wherein after generating a plurality of feature symbol sample sequences corresponding to the target service action, the method further comprises:
extracting recognition-type feature symbols and attribution-type feature symbols from the plurality of feature symbol sample sequences.

13. The method according to claim 11, wherein generating a plurality of feature symbol sample sequences corresponding to the target service action based on the mapping relationship established in advance and the plurality of sets of flow feature samples comprises:
generating a plurality of preliminary feature symbol sample sequences corresponding to the target service action based on the mapping relationship established in advance and the plurality of sets of flow feature samples; and
compressing consecutively repeated feature symbols in each of the plurality of preliminary feature symbol sample sequences into a single feature symbol, so as to generate the plurality of feature symbol sample sequences corresponding to the target service action.

14. The method according to any one of claims 1 to 11, wherein data flows in traffic of the target service action comprise at least one of the following types: Hypertext Transfer Protocol, HTTP, flows, Hypertext Transfer Protocol Secure, HTTPS, flows, or Quick UDP Internet Connections, QUIC, flows.

15. A computer-readable storage medium storing a computer program thereon, wherein the computer program, when executed by a processor, causes the processor to implement the operations of the method according to any one of claims 1 to 13.

16. An electronic apparatus, comprising a memory and a processor, the memory storing a computer program executable on the processor, wherein the processor, when executing the computer program, implements the operations of the method according to any one of claims 1 to 13.
